Europäisches Patentamt

European Patent Office

Office européen des brevets

(19)

(11) Veröffentlichungsnummer : **0 148 992**
**B1**

(12) **EUROPÄISCHE PATENTSCHRIFT**

(45) Veröffentlichungstag der Patentschrift :
**04.05.88**

(51) Int. Cl.⁴ : **G 01 N 3/16, G 01 N 3/22, G 01 N 17/00**

(21) Anmeldenummer : **84110068.8**

(22) Anmeldetag : **23.08.84**

(54) **Vorrichtung zum Einspannen von Probestücken.**

(30) Priorität : **22.12.83 DE 3346429**

(43) Veröffentlichungstag der Anmeldung :
**24.07.85 Patentblatt 85/30**

(45) Bekanntmachung des Hinweises auf die Patenterteilung : **04.05.88 Patentblatt 88/18**

(84) Benannte Vertragsstaaten :
**DE FR GB NL**

(56) Entgegenhaltungen :
**DE-A- 2 220 109**
**FR-A- 2 320 545**
**GB-A- 922 339**
**US-A- 4 393 716**
**PATENTS ABSTRACTS OF JAPAN, Band 6, Nr. 175 (P-141)[1053], 9. September 1982; & JP - A - 57 91442 (NIPPON SEIKOSHO K.K.) 07.06.1982**

(73) Patentinhaber : **Krupp Koppers GmbH**
**Altendorfer Strasse 120**
**D-4300 Essen 1 (DE)**

(72) Erfinder : **Niermann, Hans**
**Wickenburgstrasse 58**
**D-4300 Essen 1 (DE)**
Erfinder : **Köhnen, Klaus, Dipl.-Ing.**
**An den Buchen 33**
**D-4330 Mülheim (DE)**
Erfinder : **Jorde, Joachim, Dipl.-Ing.**
**Norderneyweg 1**
**D-4300 Essen 1 (DE)**

EP 0 148 992 B1

## Beschreibung

Die Erfindung betrifft eine Einspannvorrichtung mit darin eingespanntem, stabförmigem Probestück, das zwei mittels Distanzhalter im Abstand angeordnete Platten der Einspannvorrichtung durchsetzt, wobei beide Enden des Probestückes mit Gewinde versehen sind und die darauf aufgeschraubten Muttern an den Außenflächen der Platten zur Anlage kommen und wobei an einem Ende des Probestückes eine Anziehvorrichtung zwecks Aufprägung einer Zugspannung ansetzbar ist.

Es ist häufig erforderlich, das Verhalten von Werkstoffen, insbesondere hinsichtlich Festigkeit und Korrosion, unter den Bedingungen zu erproben, unter denen ihr Einsatz vorgesehen ist. Unter diesen Bedingungen sind hierbei vornehmlich das gasförmige oder flüssige Medium sowie die Temperatur zu verstehen, denen der Werkstoff im späteren Prozeß ausgesetzt ist. Hierbei ist es ferner wünschenswert, dem Probestück einen ein- oder zweiachsigen Spannungszustand aufzuprägen. Bisher hat es an geeigneten Vorrichtungen gefehlt, mit deren Hilfe die vorgenannten Untersuchungen, sei es in Laboreinrichtungen, sei es in Versuchs- oder Großanlagen, durchgeführt werden konnten.

Aus der DE-A-2 220 109 ist bereits eine Einspannvorrichtung der eingangs beschriebenen Gattung bekannt, die sowohl mit der Anziehvorrichtung als auch mit Meß- und Steuerelementen verbunden bleibt und daher für das Einbringen in Anlagenteile bzw. Laboreinrichtungen ungeeignet ist. Weiterhin ist durch die JP-A-57 91 442 eine Einspannvorrichtung bekannt, bei der dem Probestück ausschließlich eine Torsionsspannung aufprägbar ist und die gleichfalls nicht für das Einbringen in die vorgenannten Räume brauchbar ist. Schließlich beschreibt die GB-A-922 339 noch eine Einspannvorrichtung für den Einsatz in Kernreaktoren, die lediglich vorsieht, dem Probestück eine Zugspannung aufzuprägen.

Der Erfindung liegt daher die Aufgabe zugrunde, eine Einspannvorrichtung zu schaffen, die das Aufprägen sowohl eines ein- als auch eines zweiachsigen Spannungszustandes erlaubt und die bei diesem Zustand in zuverlässiger Weise Aussagen über das Werkstoffverhalten unter tatsächlich existierenden Prozeßbedingungen zu erbringen vermag.

Erfindungsgemäß wird hierzu bei einer Einspannvorrichtung der eingangs geschilderten Gattung vorgeschlagen, daß das andere Ende des Probestückes einen über die Mutter hinausragenden Vierkant besitzt, an den ein Windeisen gesetzt ist, wobei an diesem Windeisen mindestens eine an der zugehörigen Platte gelagerte Schraube angreift und damit auf das Probestück eine genau definierte Torsionsspannung aufprägbar ist, wozu das Probestück die dem Windeisen benachbarte Platte frei und mit Spiel durchsetzt, während die dem Windeisen abgewandte Platte eine Vierkantöffnung aufweist, in die ein entsprechend groß bemessener Vierkant des Probestückes hineinreicht.

Eine bevorzugte Ausführungsform der Erfindung sieht als Distanzhalter ein mit einem oder mehreren Öffnungen versehenes, von dem Probestück durchsetztes Rohr vor. Diese Öffnungen ermöglichen es, daß das Probestück direkten Kontakt mit dem umgebenden gasförmigen oder flüssigen Medium hat.

Gemäß einem weiteren Vorschlag der Erfindung ist vorgesehen, daß der Distanzhalter mindestens eine Öffnung aufweist, die ausreichend groß ist, um Messungen am Probestück mittels Dehnungsmeßstreifen durchzuführen.

Die Erfindung sieht schließlich die Verwendung der vorgeschlagenen Einspannvorrichtung mit stabförmigem Probestück in Komponenten von in Betrieb befindlichen Anlagen oder in Laboreinrichtungen vor.

Der Aufbau und die Wirkungsweise der vorgeschlagenen Vorrichtung werden im folgenden an Hand der Zeichnungen, die eine beispielsweise Ausführungsform zeigen, näher erläutert.

Es zeigen

Fig. 1 einen Längsschnitt durch die Vorrichtung und

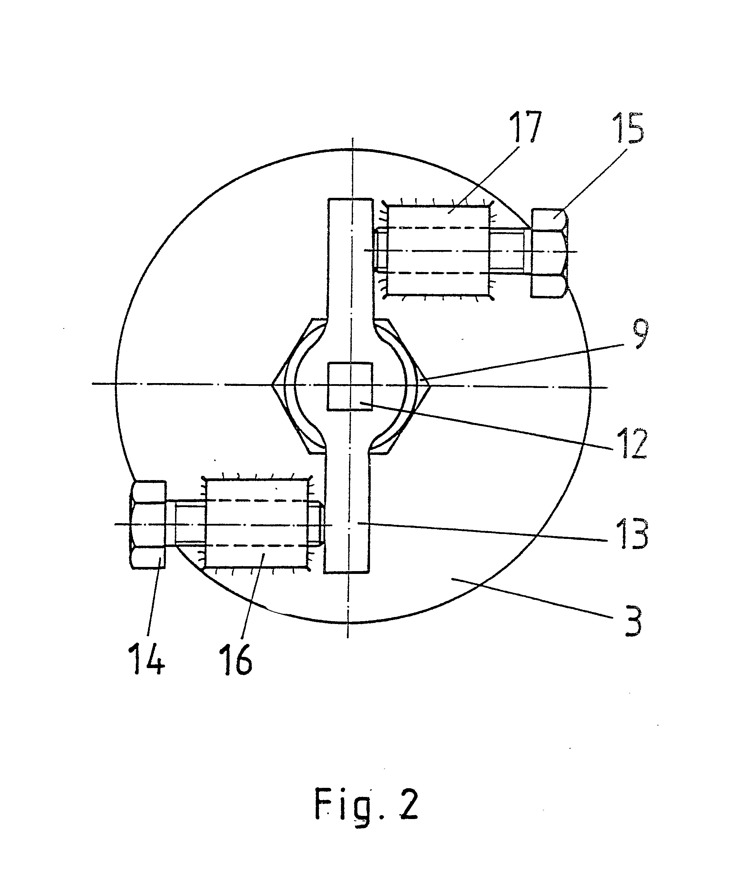

Fig. 2 eine Ansicht in Richtung des Pfeiles A nach Fig. 1.

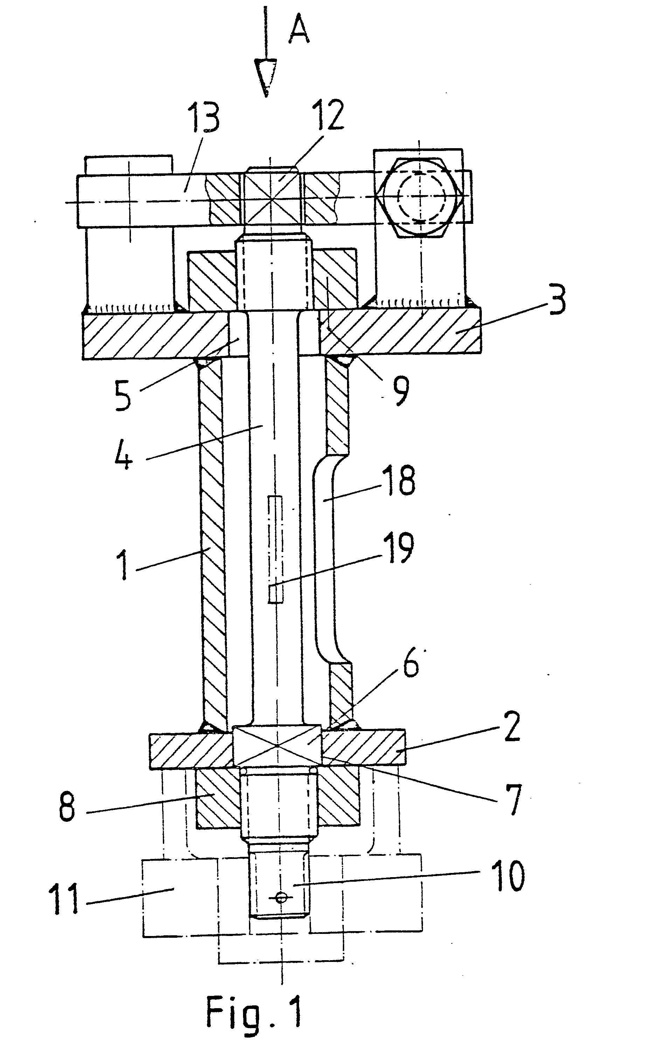

In Fig. 1 ist mit 1 der im vorliegenden Fall als Rohr ausgebildete Distanzhalter bezeichnet, an dessen Enden die beiden Platten 2 und 3 angeschweißt sind. In das Rohr 1 ist das Probestück 4 eingesetzt, das die Platte 3 durch eine entsprechend groß bemessene Öffnung 5 mit Spiel durchsetzt. Im Bereich des anderen Endes des Probestückes ist ein Vierkant 6 vorgesehen, der in eine in der Platte 2 angeordnete Vierkantöffnung 7 eingreift, so daß das Probestück in dieser Platte verdrehungssicher gelagert ist. Beide Enden des Probestückes weisen Gewinde auf, auf das jeweils eine Mutter 8 bzw. 9 geschraubt ist, die somit an den Außenflächen der Platten 2, 3 zur Anlage kommen.

Das über die Platte 2 und die Mutter 8 hinausragende Ende des Probestückes ist als Gewindezapfen 10 ausgebildet, an den eine mit 11 angedeutete Schraubenanziehvorrichtung, vorzugsweise eine hydraulisch wirkende, ansetzbar ist.

Das andere Ende des Probestückes weist einen Vierkant 12 auf, an den ein Windeisen 13 gesetzt ist. An diesem Windeisen greifen zwei Schrauben 14, 15 an, die in an der Platte 3 befestigten Lagerböcken 16, 17 gelagert sind.

Das Rohr 1 ist schließlich mit einer Öffnung 18 versehen, durch die das oben erwähnte gasförmige oder flüssige Medium in das Rohrinnere eindringen kann und damit direkten Kontakt mit dem Probestück hat. Die Öffnung ist hierbei so groß bemessen, daß Messungen am Probestück mittels eines hier mit 19 angedeuteten Dehnungsmeßstreifens durchgeführt werden können.

Mit der vorstehend beschriebenen erfindungsgemäßen Vorrichtung können dem Probestück eine Zugspannung, eine Torsionsspannung oder auch beide Spannungen genau definiert aufgeprägt werden.

Die Aufprägung einer Zugspannung geschieht durch die Schraubenanziehvorrichtung 11, die am Gewindezapfen 10 des Probestückes 4 angesetzt ist und mit deren Hilfe das Probestück auf ein gefordertes Maß gelängt wird.

Nach dem Längen wird die Mutter 8 bis zur Anlage an die Platte 2 beigedreht. Durch die exakt meßbare Längung des Probestückes kann dessen Zugspannung genau bestimmt bzw. mittels Dehnungsmeßstreifen ermittelt werden.

Für die Aufprägung einer Torsionsspannung werden zunächst die Schrauben 14, 15 von Hand gedreht, bis der Verdrehwiderstand ein weiteres manuelles Verdrehen unmöglich macht. Nun wird die hierbei erreichte Winkelstellung des Windeisens 13 als sogenannte Nullstellung gekennzeichnet. Beim nun folgenden Verdrehvorgang werden die Schrauben mit dem Schraubenschlüssel angezogen, und über die Verdrehung des Windeisens wird dem Probestück die geforderte Winkelverdrehung α aufgeprägt. Bei bekanntem Verdrehwinkel α läßt sich auf Grund vorgegebener Geometrie des Probestückes und bekannter Materialkonstanten die Torsionsspannung im Probestück berechnen bzw. mittels Dehnungsmeßstreifen ermitteln.

Für die Aufprägung einer Zug- und einer Torsionsspannung sind die vorbeschriebenen Arbeitsweisen miteinander zu kombinieren.

Das Probestück selbst kann im übrigen stabförmig mit unterschiedlichen Querschnittsformen ausgebildet sein. Selbstverständlich müssen die betreffenden Elemente der Einspannvorrichtung der jeweiligen Querschnittsform angepaßt sein.

Die mit der erfindungsgemäßen Vorrichtung erzielten Vorteile lassen sich wie folgt zusammenfassen :

a) Auf Grund der vergleichsweise kleinen Abmessungen der Spannvorrichtung ist die Möglichkeit gegeben, sie mit dem eingespannten Probestück in Komponenten von betriebenen Versuchs- oder Großanlagen und Laboreinrichtungen einzubringen und Aussagen über das Verhalten der Probestücke bei Prozeßbedingungen zu erhalten.

b) Die Vorrichtung eröffnet die Möglichkeit, meßbare Verformungen am Probestück aufzubringen, um somit einen genau definierten ein- oder zweiachsigen Spannungszustand zu erhalten.

c) Die bei Raumtemperatur aufgeprägten Spannungen im Probestück ändern sich auch bei Temperaturveränderungen unter Prozeßbedingungen nicht bzw. nur unwesentlich. Hierzu müssen Prüfwerkstoff und Werkstoffe der Vorrichtung hinsichtlich ihrer Wärmeausdehnungskoeffizienten im wesentlichen übereinstimmen.

## Patentansprüche

1. Einspannvorrichtung mit darin eingespanntem, stabförmigem Probestück (4), das zwei mittels Distanzhalter (1) im Abstand angeordnete Platten (2, 3) der Einspannvorrichtung durchsetzt, wobei beide Enden des Probestückes (4) mit Gewinde versehen sind und die darauf aufgeschraubten Muttern (8, 9) an den Außenflächen der Platten (2, 3) zur Anlage kommen und wobei an einem Ende des Probestückes (4) eine Anziehvorrichtung (11) zwecks Aufprägung einer Zugspannung ansetzbar ist, dadurch gekennzeichnet, daß das andere Ende des Probestückes (4) einen über die Mutter (9) hinausragenden Vierkant (12) besitzt, an den ein Windeisen (13) gesetzt ist, wobei an diesem Windeisen mindestens eine an der zugehörigen Platte (3) gelagerte Schraube (14 bzw. 15) angreift und damit auf das Probestück eine genau definierte Torsionsspannung aufprägbar ist, wozu das Probestück die dem Windeisen benachbarte Platte (3) frei und mit Spiel durchsetzt, während die dem Windeisen abgewandte Platte (2) eine Vierkantöffnung (7) aufweist, in die ein entsprechend groß bemessener Vierkant (6) des Probestückes hineinreicht.

2. Vorrichtung nach Anspruch 1, dadurch gekennzeichnet, daß als Distanzhalter (1) ein mit einem oder mehreren Öffnungen (18) versehenes, von dem Probestück (4) durchsetztes Rohr vorgesehen ist.

3. Vorrichtung nach Anspruch 1, dadurch gekennzeichnet, daß der Distanzhalter (1) mindestens eine Öffnung (18) aufweist, die ausreichend groß bemessen ist, um Messungen am Probestück (4).

4. Verwendung der Einspannvorrichtung mit stabförmigem Probestück nach Anspruch 1 in Komponenten von in Betrieb befindlichen Anlagen oder in Laboreinrichtungen.

## Claims

1. Clamping device with a bar-shaped test piece (4) clamped therein which penetrates through two plates (2, 3) of the clamping device which are arranged at a distance by means of a spacer (1), both ends of the test piece (4) being provided threads, and the nuts (8, 9) screwed thereon coming to bear against the outer surfaces of the plates (2, 3), it being possible for a tightening device (11), for imposing a tensile stress, to be attached to one end of the test piece (4), characterized in that the other end of the test piece (4) has a square (12) which protrudes beyond the nut (9) and onto which a tap wrench (13) is placed, with at least one screw (14, or 15), mounted on the associated plate (3), engaging on this tap wrench and with it thus being possible for a precisely defined torsional stress to be imposed on the test piece, for which purpose the test piece penetrates freely and with clearance through the plate (3) adjacent to the tap wrench, while the plate (2) remote from the tap wrench has a square opening (7) into which a test-piece square (6) of correspondingly large size extends.

2. Device according to Claim 1, characterized in that a tube provided with one or more openings (18) and through which the test piece (4) penetrates is provided as a spacer (1).

3. Device according to Claim 1, characterized in that the spacer (1) has at least one opening (18) which is of a large enough size for measurements [lacuna] on the test piece (4) [lacuna].

4. Use of the clamping device with a bar-shaped test piece according to Claim 1 in components of operating plants or laboratory equipment.

## Revendications

1. Dispositif de serrage dans lequel est insérée une éprouvette (4) en forme de barre traversant deux plateaux (2, 3) dudit dispositif, qui sont maintenus écartés l'un de l'autre par une entretoise (1), les deux extrémités de l'éprouvette (4) étant pourvues d'un filetage et les écrous (8, 9), vissés sur celui-ci, venant en contact avec les surfaces externes des plateaux (2, 3), un dispositif de vissage (11) pouvant être mis en place à l'une des extrémités de l'éprouvette (4) dans le but d'exercer une contrainte de traction, caractérisé par le fait que l'autre extrémité de l'éprouvette (4) possède un quatre pans (12) qui surplombe l'écrou (9) et sur lequel est mis en place un tourne-à-gauche (13), au moins une vis (14 ou 15), placée sur le plateau correspondant (3), venant en prise avec ce tourne-à-gauche (13) et appliquant à l'éprouvette une contrainte de torsion exactement définie, l'éprouvette traversant à cet effet librement et avec jeu le plateau (3) voisin du tourne-à-gauche, alors que le plateau (2), opposé au tourne-à-gauche, présente une ouverture carrée (7), dans laquelle s'engage un quatre pans (6) de l'éprouvette, dimensionné pour correspondre à la taille de ladite ouverture (7).

2. Dispositif selon la revendication 1, caractérisé par le fait qu'on prévoit comme entretoise (1) un tube pourvu d'une ou de plusieurs ouvertures (18) et traversé par l'éprouvette (4).

3. Dispositif selon la revendication 1, caractérisé par le fait que l'entretoise (1) présente au moins une ouverture (18) suffisamment grande pour permettre d'effectuer des mesures sur l'éprouvette (4) à l'aide de jauges extensométriques.

4. L'utilisation, dans des éléments d'installations en service ou dans des équipements de laboratoire, du dispositif de serrage avec éprouvette en forme de barre selon la revendication 1.

Fig. 1

17    15

9

12

13

3

14    16

# Fig. 2